# EUROPEAN PATENT APPLICATION

(11) **EP 4 362 171 A1**
(43) Date of publication of application: **01.05.2024**
(21) Application number: 22889134.7
(22) Date of filing: 24.10.2022
(51) Int. Cl.: H01M 10/613

(54) **BATTERY COOLING STRUCTURE, BATTERY, AND POWER CONSUMING DEVICE**

(30) Priority: 05.11.2021 CN 202111306189
(71) Applicant: Contemporary Amperex Technology Co., Limited, Ningde, Fujian 352100 (CN)
(72) Inventor: CHEN, Xuan, Ningde, Fujian 352100 (CN)
(74) Representative: Gong, Jinping
(86) International application number: PCT/CN2022/126894
(87) International publication number: WO 2023/078109

(57) **Abstract**

The present application discloses a battery cooling structure, a battery and a power consuming device. The battery cooling structure comprises: a cooling liquid delivery pipe configured to deliver a cooling liquid to a battery enclosure; a cooling channel comprising a first cooling channel and a second cooling channel, the first cooling channel being provided in an enclosure bottom plate of the battery enclosure, the second cooling channel being provided in an enclosure end plate of the battery enclosure, and the first cooling channel and the second cooling channel being in communication with each other once the enclosure bottom plate and the enclosure end plate are combined; and a first water-cooling joint provided on an outer side of the enclosure end plate and comprising a first end and a second end, the first end being connected to the cooling liquid delivery pipe, and the second end being connected to the second cooling channel, such that the cooling liquid is input into or output from the cooling channel via the first water-cooling joint. By providing the first water-cooling joint and the cooling liquid delivery pipe on the outer side of the enclosure end plate, an available space in the battery enclosure is expanded while keeping the cooling liquid from entering the battery enclosure.

## Description

### Cross-Reference to Related Application

The present application claims the priority of Chinese patent application no. 202111306189.3, entitled "BATTERY COOLING STRUCTURE, BATTERY, AND POWER CONSUMING DEVICE" and filed on November 05, 2021, which is incorporated herein by reference in its entirety.

### Technical Field

The present application relates to the field of batteries, and more particularly to a battery cooling structure, a battery and a power consuming device.

### Background Art

As one of chemical batteries, lithium-ion batteries have the advantages such as small volume, high energy density, high power density, long cycle life and extended storage time, and therefore are widely used in some electronic apparatus, electric vehicles, electric toys and electric apparatus. For example, currently, the lithium-ion batteries have been widely applied to mobile phones, notebook computers, battery cars, electric cars, electric planes, electric ships, electric toy cars, electric toy ships, electric toy planes and power tools, etc.

The lithium-ion batteries are used in three forms as follows: a battery cell, a battery module, and a battery pack. The battery module is formed by electrically connecting a specific quantity of battery cells and putting the battery cells into a frame to protect the battery cells from external impact, heat, vibration, etc. The battery pack is a final state of a battery system mounted in the electric vehicle. Most of current battery packs are manufactured by assembling various control and protection systems such as a battery management system (BMS) and a thermal management component on one or more battery modules. It is necessary to provide a battery enclosure in the battery pack. In addition to functions of mounting a plurality of battery modules in a vehicle and providing protection for the battery modules, the battery enclosure is further provided with a cooling channel internally, and a cooling liquid circulates in the cooling channel so as to cool the battery modules. The cooling channel needs to be connected to a cooling liquid delivery pipe, and the cooling liquid delivery pipe is then externally connected to a cooling liquid delivery pump and other devices. The cooling channel and the cooling liquid delivery pipe are connected by means of a water-cooling joint. The conventional cooling liquid delivery pipes are unreasonably provided, which affects the quality of a battery.

### Summary

The present application provides a battery cooling structure, a battery and a power consuming device in order to cool a battery module inside a battery enclosure, which not only expands an available space in the battery enclosure, but also prevents a cooling liquid from entering the battery enclosure.

According to a first aspect of the present application, there is provided a battery cooling structure, comprising:
a cooling liquid delivery pipe configured to deliver a cooling liquid to a battery enclosure;
a cooling channel comprising a first cooling channel and a second cooling channel, the first cooling channel being provided in an enclosure bottom plate of the battery enclosure, the second cooling channel being provided in an enclosure end plate of the battery enclosure, and the first cooling channel and the second cooling channel being in communication with each other once the enclosure bottom plate and the enclosure end plate are combined; and
a first water-cooling joint provided on an outer side of the enclosure end plate and comprising a first end and a second end, the first end being connected to the cooling liquid delivery pipe, and the second end being connected to the second cooling channel, such that the cooling liquid is input into or output from the cooling channel via the first water-cooling joint.

By providing the first water-cooling joint and the cooling liquid delivery pipe on the outer side of the enclosure end plate, the first water-cooling joint is prevented from occupying an internal space of the battery enclosure, and the available space in the battery enclosure is expanded. Also, even if leakage occurs at the first water-cooling joint or a connection thereof, it only occurs outside the battery enclosure and does not cause the cooling liquid to enter the battery enclosure, thereby improving the safety of the battery enclosure.

In some embodiments, the first water-cooling joint is configured to be in an L shape, the first end is provided with a pagoda connection structure and is connected to the cooling liquid delivery pipe in a sealed manner by means of the pagoda connection structure, and the second end is provided with a plurality of sealing rings on an outer circumferential surface thereof and is connected to the second cooling channel in a sealed manner by means of the sealing rings.

By configuring the first water-cooling joint to be in the L shape, it is convenient to connect the cooling liquid delivery pipe and the second cooling channel, such that the cooling liquid delivery pipe and the second cooling channel can be vertically connected to avoid the cooling liquid delivery pipe from occupying a large space, optimizing the overall size of the battery enclosure.

In some embodiments, the battery cooling structure further comprises a second water-cooling joint, the second water-cooling joint being provided on an outer side of the enclosure end plate and being fixedly connected to the enclosure end plate; the second water-cooling joint comprises a body, wherein the body is internally provided with an internal channel, an upper portion of the body is provided with at least one upper port, a lower portion of the body is provided with at least one lower port, and the upper port is in communication with the lower port by means of the internal channel.

By providing the second water-cooling joint, a unified interface is provided for providing a plurality of cooling liquid delivery pipes, thereby simplifying a whole structure of the cooling liquid delivery pipe.

In some embodiments, a plurality of the cooling liquid delivery pipes are provided, a plurality of the first water-cooling joints are provided, and a plurality of the lower ports are provided at the lower portion of the body; an upper end of each of the cooling liquid delivery pipes is connected to one of the lower ports of the second water-cooling joint, a lower end of each of the cooling liquid delivery pipes is connected to one of the first water-cooling joints, and a plurality of the first water-cooling joints are respectively connected to the cooling channels of a plurality of enclosure bottom plates.

By providing the plurality of cooling liquid delivery pipes, the functions of inputting a cooling liquid and outputting the cooling liquid can be provided for a plurality of battery enclosures to meet the need for centralized arrangement of the plurality of battery enclosures.

In some embodiments, a first wing plate is provided on a side of the first water-cooling joint, mounting holes are provided in the first wing plate, and bolts are provided in the mounting holes to secure the first water-cooling joint on the enclosure end plate.

By providing the first wing plate, the mounting firmness of the first water-cooling joint is strengthened, the sealing performance of the connection between the first water-cooling joint and the second cooling channel is improved, and the first water-cooling joint is also not loosened and does not cause leakage in a long-term vibration environment.

In some embodiments, a second wing plate is provided on a side of the upper end of the cooling liquid delivery pipe, mounting holes are provided in the second wing plate, and bolts are provided in the mounting holes to secure the cooling liquid delivery pipe on the second water-cooling joint.

By providing the second wing plate, the mounting firmness of the cooling liquid delivery pipe is strengthened, the sealing performance of the connection between the cooling liquid delivery pipe and the second water-cooling joint is improved, and the cooling liquid delivery pipe is also not loosened and does not cause leakage in a long-term vibration environment.

According to a second aspect of the present application, there is provided a battery, comprising a battery enclosure configured to store a plurality of battery cells. The battery enclosure comprises an enclosure bottom plate, enclosure end plates and enclosure side plates; and the battery further comprises two or more of the battery cooling structures described in any one of the above embodiments, the second cooling channels of the battery cooling structures are provided on the enclosure end plates at the same end, any one of the battery cooling structures constitutes a cooling liquid input path, and the other of the battery cooling structures constitutes a cooling liquid output path.

By providing the second cooling channels of the two battery cooling structures on the enclosure end plates at the same end, the corresponding first water-cooling joints and the corresponding cooling liquid delivery pipes are also provided on the enclosure end plates at the same end and respectively provide the functions of inputting a cooling liquid and outputting the cooling liquid for the battery enclosure, reducing the overall size of the battery, and also facilitating the mounting of the first water-cooling joints, the cooling liquid delivery pipes and the second water-cooling joints.

In some embodiments, an upper edge and a lower edge close to the enclosure end plate are provided with protruding strips in a thickness direction of the enclosure end plate, the protruding strip of the lower edge is provided with a first positioning groove corresponding to the first water-cooling joint, and the first water-cooling joint is secured in the first positioning groove; the protruding strip of the upper edge is provided with a second positioning groove at a position corresponding to the second water-cooling j oint, the second water-cooling j oint is secured in the second positioning groove, and the first water-cooling joint, the second water-cooling joint, and the cooling liquid delivery pipe are not higher than the protruding strips.

By providing the protruding strips, on the one hand, the structural strength of the enclosure end plates is strengthened, and it is also convenient to mount the first water-cooling joints, the cooling liquid delivery pipes and the second water-cooling joints; on the other hand, the first water-cooling joints, the second water-cooling joints, and the cooling liquid delivery pipes are not higher than the protruding strips, so that the battery enclosure is regular in appearance, facilitating the centralized arrangement of the plurality of battery enclosures.

In some embodiments, a positioning block is provided at an upper end of the body of the second water-cooling joint, the upper port is provided on the positioning block and protrudes upward from the upper edge of the enclosure end plate, a stopper is provided at an upper portion of the second positioning groove and restricts the positioning block from the outer side of the enclosure end plate, and the second water-cooling joint is welded and fixed to an edge of the second positioning groove.

By providing the stopper, the second water-cooling joint is limited, the mounting firmness of the second water-cooling joint is strengthened, and the second water-cooling joint is also not loosened in a long-term vibration environment. The second water-cooling joint is welded and fixed to the enclosure end plate, so that the structural strength of the enclosure end plate can also be improved.

In some embodiments, the battery further comprises two or more of the battery enclosures which are stacked one above another. Only the battery enclosure located on an uppermost layer is provided with the second positioning groove at a position corresponding to the second water-cooling joint, and each of the battery cooling structures is internally provided with the same number of cooling liquid delivery pipes as the number of the battery enclosures; and
the protruding strip of the lower edge of the enclosure end plate is provided with a third positioning groove and a retainer ring corresponding to the cooling liquid delivery pipe, the retainer ring is provided with mounting holes, bolts are provided in the mounting holes, and the cooling liquid delivery pipe is secured in the third positioning groove by means of the retainer ring.

By stacking two or more of the battery enclosures one above another, and providing the first water-cooling joints, the cooling liquid delivery pipes and the second water-cooling joints on the enclosure end plates at the same end, the overall size of the battery is reduced, the energy density of the battery is improved, the manufacturing costs of the battery are reduced, and the manufacturing efficiency of the battery is increased.

According to a third aspect of the present application, there is provided a power consuming device, comprising a battery described in any one of the above embodiments, the battery being configured to supply electric energy.

### Brief Description of the Drawings

The accompanying drawings described herein are intended to provide a further understanding of the present application, which constitutes a part of the present application. The illustrative embodiments of the present application and the description thereof are intended to explain the present application, and do not constitute an undue limitation on the present application. In the drawings:
Fig. 1 shows a schematic diagram of some embodiments of a vehicle using a battery of the present application;
Fig. 2 shows a schematic exploded view of some embodiments of the battery of the present application;
Fig. 3 shows a schematic perspective view of a battery enclosure according to some embodiments of the present application;
Fig. 4 shows an enlarged view of part A in Fig. 3;
Fig. 5 shows a schematic cross-sectional view of a battery enclosure according to some embodiments of the present application;
Fig. 6 shows an enlarged view of part B in Fig. 5;
Fig. 7 shows a schematic front view of an enclosure end plate according to some embodiments of the present application;
Fig. 8 shows a schematic perspective view of an enclosure end plate according to some embodiments of the present application;
Fig. 9 shows a schematic exploded view of an enclosure end plate according to some embodiments of the present application;
Fig. 10 shows a schematic perspective view of a first water-cooling joint according to some embodiments of the present application;
Fig. 11 shows a schematic perspective view of a cooling liquid delivery pipe according to some embodiments of the present application;
Fig. 12 shows an enlarged view of part C in Fig. 11;
Fig. 13 shows an enlarged view of part D in Fig. 11; and
Fig. 14 shows an enlarged view of part E in Fig. 11.

Description of reference numerals: 1. Enclosure bottom plate; 1-1. First cooling channel; 2. Enclosure end plate; 2-1. Second cooling channel; 2-2. Second positioning groove; 2-3. Stopper; 2-4. First positioning groove; 2-5. Third positioning groove; 3. Second water-cooling joint; 3-1. Body; 3-2. Positioning block; 3-3. First end; 3-4. Limiting plate; 4. Cooling liquid delivery pipe; 5. First water-cooling joint; 5-1. First end; 5-2. Second end; 5-3. First wing plate; 6. Enclosure side plate; 7. Retainer ring; 8. Second wing plate; 9. Vehicle; 10. Battery; 11. Controller; 12. Motor; 13. Battery cell; 14. Battery enclosure; 1401. Upper cover; and 1402. Lower enclosure part.

### Detailed Description of Embodiments

In order to make the objectives, technical solutions and advantages of the present application clearer, the technical solutions in a plurality of embodiments of the present application will be described clearly and completely below with reference to the shown accompanying drawings in the embodiments of the present application. It should be understood that, the embodiments described are merely some of, rather than all of, the embodiments of the present application. All other embodiments obtained by those of ordinary skill in the art on the basis of the embodiments described in the present application without involving any inventive effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprise", "including", "include", "is provided with", "contain", "having", etc. in the specification and the claims of the present application and in the foregoing brief description of the drawings are open-class words. Therefore, a method or device "comprising", "including" or "having", for example, one or more steps or elements, means that the method or device is provided with one or more steps or elements, but is not limited to having only one or more elements. The terms "first", "second", etc. in the description and the claims of the present application as well as the foregoing accompanying drawings are used to distinguish between different objects, rather than describing a specific order or a primary-secondary relationship. In addition, the terms "first" and "second" are used for descriptive purposes only, and cannot be construed as indicating or implying relative importance or implicitly indicating the number of technical features indicated. Thus, the features defined with "first" and "second" can explicitly or implicitly include one or more of the features. In the description of the present application, the term "a plurality of" means two or more, unless otherwise specified.

In the description of the present application, it should be understood that the orientation or positional relationships indicated by the terms "center", "transverse", "length", "width", "upper", "lower", "front", "rear", "left", "right", "vertical", "horizontal", "top", "bottom", "inner", "outer", "axial", "radial", "circumferential", etc. are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application can be combined with another embodiment.

As described above, it should be emphasized that when the term "comprising/including" is used in this specification, it is used to clearly indicate the presence of the features, integers, steps or components, but it does not exclude the presence or addition of one or more other features, integers, steps and components or groups of features, integers, steps, and components. As used in the present application, the singular forms "a", "an" and "the" also include the plural forms, unless otherwise clearly stated in the context.

The words "a" and "an" in this specification may mean one, but may also have the same meaning as "at least one" or "one or more". The term "about" generally means the value mentioned plus or minus 10%, or more specifically, plus or minus 5%. The term "or" used in the claims means "and/or", unless it is clearly indicated that it refers to alternatives only.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the present application, "a plurality of" means two or more (including two), similarly, "a plurality of groups" means two or more groups (including two groups), and "a plurality of pieces" means two or more pieces (including two pieces).

Batteries mentioned in the art can be divided into primary batteries and rechargeable batteries, depending on whether they are rechargeable or not. The primary batteries are commonly referred to as "disposable" batteries and primary cells, as they cannot be recharged and used after their charge has been exhausted and can only be discarded. The rechargeable batteries are also referred to as secondary batteries, secondary cells, or storage batteries. The material and process for manufacturing the rechargeable batteries are different from those for manufacturing the primary batteries. Advantages of the rechargeable batteries are that the rechargeable batteries can be used cyclically for a plurality of times after being charged, and have a larger output current load capacity than most primary batteries. At present, common types of the rechargeable batteries include: lead-acid batteries, nickel-hydrogen batteries, and lithium-ion batteries. The lithium-ion batteries have the advantages such as light weight, large capacity (the capacity is 1.5 to 2 times that of the nickel-hydrogen batteries of the same weight), and zero memory effect, and have a very low self-discharge rate. Therefore, despite its relatively high price, the lithium-ion battery cells have still been widely applied. Lithium-ion batteries are also used in battery electric vehicles and hybrid vehicles. The lithium-ion batteries used for this purpose have slightly lower capacity, but have larger output and charging current. Some batteries have longer service life, but are higher in cost.

The batteries described in the embodiments of the present application specifically refer to the rechargeable batteries. A lithium-ion battery will be mainly used as an example below to describe the concept of the present application. It should be construed that any other suitable types of rechargeable batteries are all applicable. A battery mentioned in embodiments of the present application refers to a single physical module including one or more battery cells to provide a higher voltage and capacity. For example, the battery mentioned in the present application may include a battery module, a battery pack, etc. The battery cell comprises a positive electrode plate, a negative electrode plate, an electrolyte and a separator, and is a basic structural unit forming a battery module or a battery pack. The battery cells are generally classified into three types depending on the way of package: a cylindrical battery cell, a square battery cell, and a pouch battery cell.

The lithium-ion battery cell operates mainly by the movement of lithium ions between the positive electrode plate and the negative electrode plate. The lithium-ion battery cell uses an embedded lithium compound as an electrode material. Common materials currently used as positive electrodes of the lithium-ion batteries mainly include: lithium cobalt oxide (LiCoO₂), lithium manganate (LiMn₂O₄), lithium nickelate (LiNiO₂) and lithium iron phosphate (LiFePO₄). The separator is provided between the positive electrode plate and the negative electrode plate to form a thin film structure with three layers of materials. The thin film structure is generally wound or stacked to form an electrode assembly having a desired shape. For example, a thin film structure of three layers of materials in a cylindrical battery cell is wound into a cylindrical electrode assembly, while a thin film structure in a square battery cell is wound or stacked into an electrode assembly having a substantially cuboid shape.

The plurality of battery cells may be connected together in series and/or in parallel via electrode terminals, for use in various application scenarios. In some high-power application scenarios such as an electric vehicle, the use of the battery includes three levels: a battery cell, a battery module, and a battery pack. The battery module is formed by electrically connecting a specific quantity of battery cells and putting the battery cells into a frame to protect the battery cells from external impact, heat, vibration, etc. The battery pack is a final state of a battery system mounted in the electric vehicle. Most of current battery packs are manufactured by assembling various control and protection systems such as a battery management system (BMS) and a thermal management component on one or more battery modules. With the development of technologies, the battery module may be omitted, that is, the battery pack is directly formed by battery cells. With this improvement, the number of parts is remarkably reduced while a weight energy density and a volume energy density of the battery system are improved.

In the related art, a conventional cooling liquid delivery pipe is mounted inside a battery enclosure. On the one hand, this pipe occupies a space in the enclosure and reduces the energy density of the battery. On the other hand, due to the presence of a water-cooling joint inside the enclosure, a cooling liquid is prone to leakage at a plug-in connection, causing short circuiting and posing a serious safety hazard. In the present application, by providing a first water-cooling joint and a cooling liquid delivery pipe on an outer side of an enclosure end plate, an available space in the battery enclosure is expanded while keeping the cooling liquid from entering the battery enclosure.

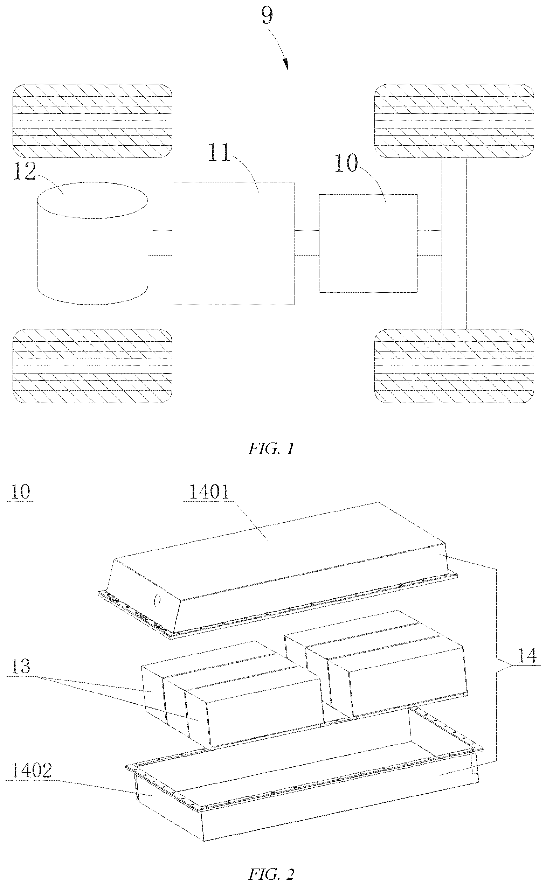

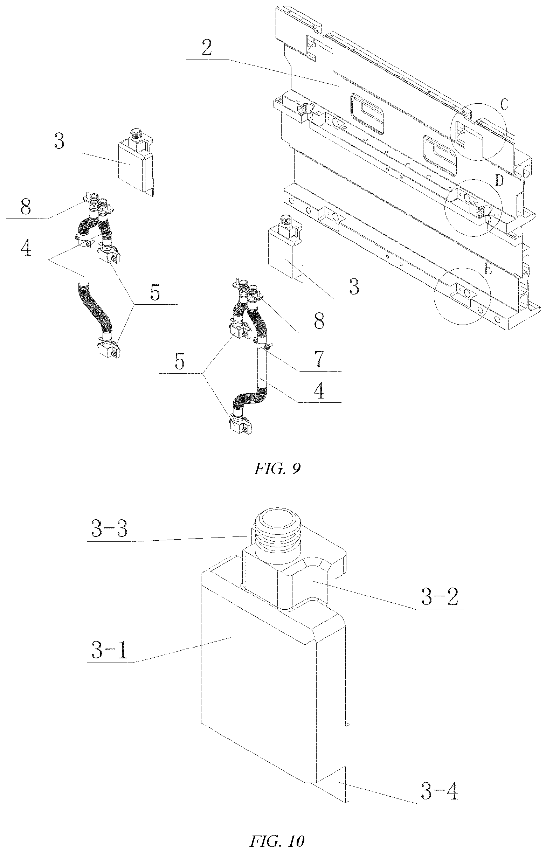

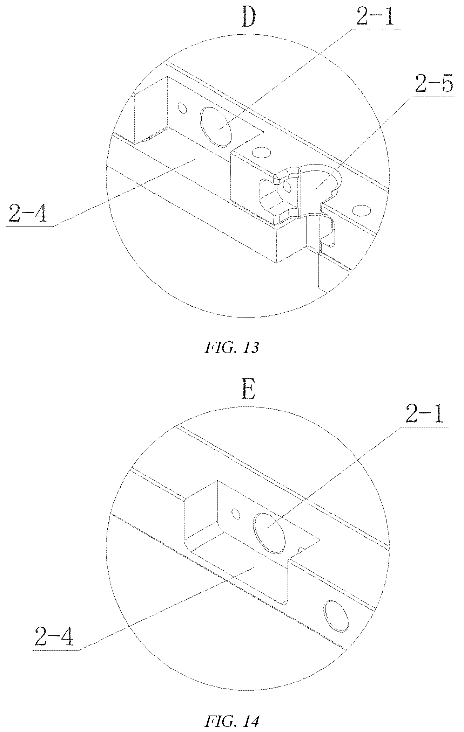

For a better understanding of the present application, the following describes in detail the embodiments of the present application with reference to Figs. 1 to 14.

The battery disclosed in an embodiment of the present application may be used in, but not limited to, a power consuming device such as a vehicle, a ship or an aircraft. A power supply system of the power consuming device may be composed of the battery cell, the battery and the like disclosed in the present application, so that it is conducive to improving the performance of the battery and prolonging the service life of the battery.

The embodiments of the present application provide a power consuming device using a battery as a power source. The power consuming device may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

The battery described in the embodiments of the present application is not only applicable to the apparatuses described above, but also applicable to all apparatuses using batteries. However, for the sake of brevity of description, the following embodiments will be described by taking an electric vehicle as an example.

Referring to Fig. 1, Fig. 1 is a schematic diagram of a vehicle 9 according to some embodiments of the present application. The vehicle 9 may be a fuel vehicle, a gas vehicle, or a new energy vehicle. The new energy vehicle may be a battery electric vehicle, a hybrid electric vehicle, an extended-range vehicle, etc. A battery 10 is provided inside the vehicle 9, and the battery 10 may be provided at a bottom, a head or a tail of the vehicle 9. The battery 10 may be configured to supply power to the vehicle 9. For example, the battery 10 may be used as a power source for operating the vehicle 9. The vehicle 9 may further comprise a controller 11 and a motor 12. The controller 11 is configured to control the battery 10 to supply power to the motor 12, and for example, is configured to meet working power requirements of the vehicle 9 during starting, navigation and traveling.

In some embodiments of the present application, the battery 10 may not only serve as a power source for operating the vehicle 9, but also serve as a power source for driving the vehicle 9, thus replacing or partially replacing fuel or natural gas to provide driving power for the vehicle 9.

Referring to Fig. 2, Fig. 2 is a schematic exploded view of a battery 10 according to some embodiments of the present application. The battery 10 comprises a battery enclosure 14 and a battery cell 13. The battery cell 13 is accommodated in the battery enclosure 14. The battery enclosure 14 is configured to provide an accommodation space for the battery cell 13, and the battery enclosure 14 may be of various structures. In some embodiments, the battery enclosure 14 may comprise an upper cover 1401 and a lower enclosure part 1402, where the upper cover 1401 and the lower enclosure part 1402 cover each other, and the upper cover 1401 and the lower enclosure part 1402 jointly define the accommodation space for accommodating the battery cell 13. The lower enclosure part 1402 may be of a hollow structure with one end open, the upper cover 1401 may be of a plate-like structure, and the upper cover 1401 covers an open side of the lower enclosure part 1402, such that the upper cover 1401 and the lower enclosure part 1402 jointly define the accommodation space; and the upper cover 1401 and the lower enclosure part 1402 each may also be of a hollow structure with one side open, and the open side of the upper cover 1401 covers the open side of the lower enclosure part 1402. Of course, the battery enclosure 14 formed by the upper cover 1401 and the lower enclosure part 1402 may be of various shapes, such as a cylinder and a cuboid.

In the battery 10, a plurality of battery cells 13 may be provided. The plurality of battery cells 13 may be in series connection, in parallel connection, or in parallel-series connection. The parallel-series connection means that some of the plurality of battery cells 13 are connected in series and some are connected in parallel. The plurality of battery cells 13 may be directly connected together in series, or in parallel, or in series-parallel, and then a whole composed of the plurality of battery cells 13 is accommodated in the battery enclosure 14. Of course, the battery 10 may also be a unit accommodated in the battery enclosure 14, which is formed by firstly connecting a plurality of battery cells 13 in series or in parallel or in series-parallel to form a plurality of battery cells, and then connecting the plurality of battery cells in series or in parallel or in series-parallel.

Optionally, the battery 10 may further comprise other structures, which will not be repeated herein. For example, the battery 10 may further comprise a bus component. The bus component is configured to achieve an electric connection, such as parallel connection, series connection, or series-parallel connection, between the plurality of battery cells 13. Specifically, the bus component may achieve an electrical connection between the battery cells 13 by connecting electrode terminals of the battery cells 13. Further, the busbar component may be fixed to the electrode terminals of the battery cells 13 by means of welding. Electric energy of the plurality of battery cells 13 may further pass through the battery enclosure 14 to be extracted by means of an electrically conductive mechanism. Optionally, the electrically conductive mechanism may also belong to the bus component.

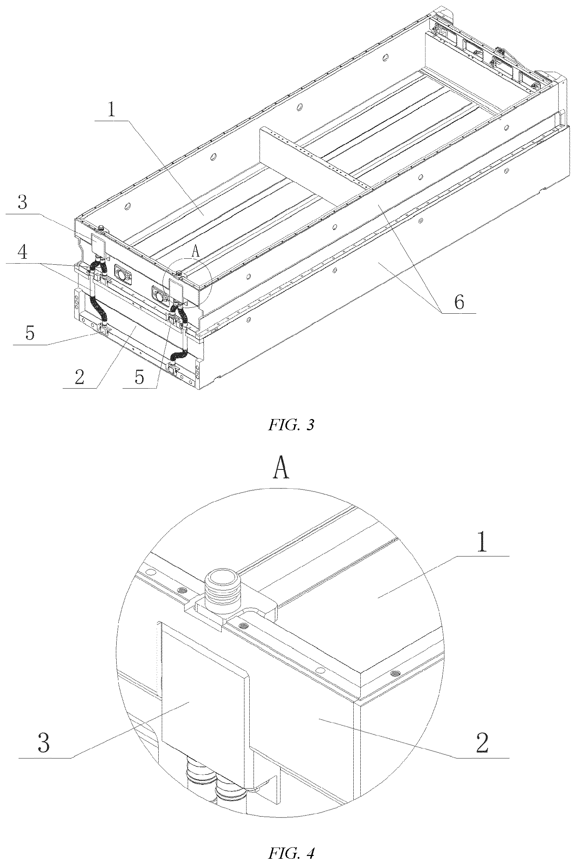

As shown in Figs 3, 4, 5, and 6, it illustrates a battery cooling structure according to an embodiment of the present application. The battery cooling structure comprising: a cooling liquid delivery pipe 4 configured to deliver a cooling liquid to a battery enclosure; a cooling channel comprising a first cooling channel 1-1 and a second cooling channel 2-1, the first cooling channel 1-1 being provided in an enclosure bottom plate 1 of the battery enclosure, the second cooling channel 2-1 being provided in an enclosure end plate 2 of the battery enclosure, and the first cooling channel 1-1 and the second cooling channel 2-1 being in communication with each other once the enclosure bottom plate 1 and the enclosure end plate 2 are combined; and a first water-cooling joint 5 provided on an outer side of the enclosure end plate 2 and comprising a first end 5-1 and a second end 5-2, the first end 5-1 being connected to the cooling liquid delivery pipe 4, and the second end 5-2 being connected to the second cooling channel 2-1, such that the cooling liquid is input into or output from the cooling channel via the first water-cooling joint 5.

It should be noted that two battery cooling structures are comprised in Fig. 3, and the two battery cooling structures are the same and are symmetrically provided on the enclosure end plate 2.

By providing the first water-cooling joint 5 and the cooling liquid delivery pipe 4 on the outer side of the enclosure end plate 2, the first water-cooling joint 5 is prevented from occupying an internal space of the battery enclosure, and the available space in the battery enclosure is expanded. Also, even if leakage occurs at the first water-cooling joint 5 or a connection thereof, it only occurs outside the battery enclosure and does not cause the cooling liquid to enter the battery enclosure, thereby improving the safety of the battery enclosure.

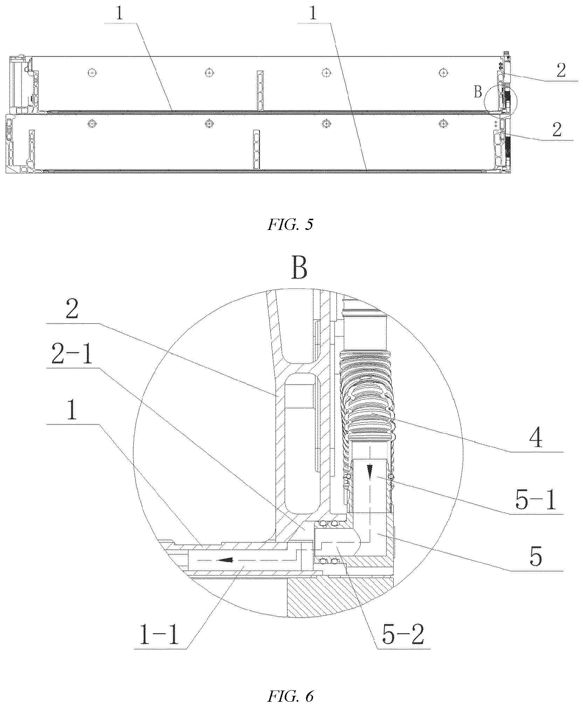

As shown in Fig. 6, the first water-cooling joint 5 is configured to be in an L shape, the first end 5-1 is provided with a pagoda connection structure. The pagoda connection structure is provided with a plurality of inclined steps on an outer circumferential surface of the first end 5-1, the first end is connected to the cooling liquid delivery pipe 4 in a sealed manner by means of the pagoda connection structure, a plurality of sealing rings are provided on an outer circumferential surface of the second end 5-2, and the second end is connected to the second cooling channel 2-1 in a sealed manner by means of the sealing rings. Correspondingly, a plurality of sealing grooves are provided in the outer circumferential surface of the second end 5-2, and a sealing ring is provided in each sealing groove.

By configuring the first water-cooling joint 5 to be in the L shape, it is convenient to connect the cooling liquid delivery pipe 4 and the second cooling channel 2-1, such that the cooling liquid delivery pipe 4 and the second cooling channel 2-1 can be vertically connected to avoid the cooling liquid delivery pipe 4 from occupying a large space, optimizing the overall size of the battery enclosure.

The pagoda connection structure provided at the first end 5-1 can improve the firmness of connection between the first water-cooling joint 5 and the cooling liquid delivery pipe 4, and can also play a sealing effect. The plurality of sealing rings provided at the second end 5-2 can improve the firmness of connection with the second cooling channel 2-1, and can also play a sealing effect.

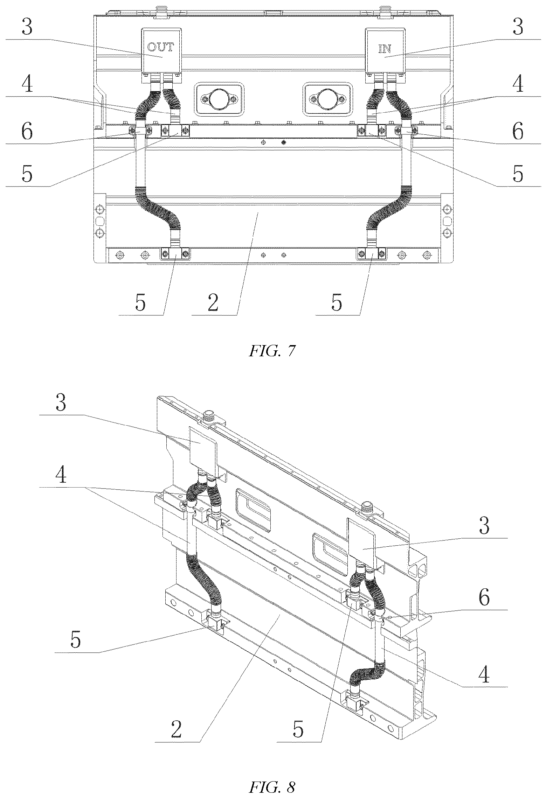

As shown in Figs 7, 8, 9, and 10, the battery cooling structure further comprises a second water-cooling j oint 3. The second water-cooling j oint 3 is provided on the outer side of the enclosure end plate 2 and is fixedly connected to the enclosure end plate 2. The second water-cooling joint 3 comprises a body 3-1, where the body 3-1 is internally provided with an internal channel, at least one upper port 3-3 is provided at the upper portion of the body 3-1, at least one lower port (not shown) is provided at the lower portion of the body, and the upper port 3-3 is in communication with the lower port by means of the internal channel (not shown).

When the second water-cooling joint 3 comprises an upper port 3-3 and two lower ports, the internal channel is an inverted Y shape, and one upper port 3-3 is in communication with the two lower ports by means of the inverted Y-shaped internal channel.

By providing the second water-cooling joint 3, a unified interface is provided for providing a plurality of cooling liquid delivery pipes 4, thereby simplifying a whole structure of the cooling liquid delivery pipe 4.

As shown in Figs 7, 8, 9, and 11, two cooling liquid delivery pipes 4 are provided, two first water-cooling joints 5 are provided, and a plurality of lower ports are provided at the lower portion of the body 3-1. The upper end of each cooling liquid delivery pipe 4 is connected to a lower port of the second water-cooling joint 3, the lower end of each cooling liquid delivery pipe 4 is connected to a first water-cooling joint 5, and the two first water-cooling joints 5 are respectively connected to the cooling channels of two enclosure bottom plates 1.

The upper end of the cooling liquid delivery pipe 4 can also be provided with a pagoda connection structure or a plurality of sealing rings, so as to improve the firmness of connection with the first water-cooling joint 5 and also play a sealing effect.

Of course, the battery cooling structure can also comprise more than two cooling liquid delivery pipes 4 by correspondingly adjusting the first water cooling joint 5, which will not be repeatedly described here.

The cooling liquid delivery pipe 4 may be a corrugated pipe to facilitate bending according to a relative positional relationship between the first water-cooling joint 5 and the second water-cooling joint 3. It is also possible to provide corrugated pipe at a part that needs to be bent and to provide straight pipes at other parts, which may specifically be metal corrugated pipes or plastic corrugated pipes. By providing the plurality of cooling liquid delivery pipes 4, functions of inputting a cooling liquid and outputting the cooling liquid can be provided for a plurality of battery enclosures to meet the need for centralized arrangement of the plurality of battery enclosures.

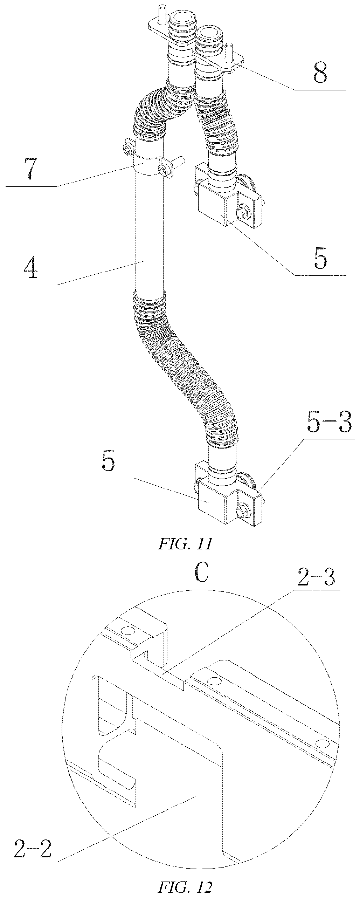

As shown in Fig. 11, a first wing plate 5-3 is provided on a side of the first water-cooling joint 5, mounting holes are provided in the first wing plate 5-3, and bolts are provided in the mounting holes to secure the first water-cooling joint 5 on the enclosure end plate 2.

By providing the first wing plate 5-3, the mounting firmness of the first water-cooling joint 5 is strengthened, the sealing performance of the connection between the first water-cooling joint 5 and the second cooling channel 2-1 is improved, and the first water-cooling joint 5 is also not loosened and does not cause leakage in a long-term vibration environment.

As shown in Fig. 11, a second wing plate 8 is provided on a side of the upper end of the cooling liquid delivery pipe 4, mounting holes are provided in the second wing plate 8, and bolts are provided in the mounting holes to secure the cooling liquid delivery pipe 4 on the second water-cooling j oint 3.

By providing the second wing plate 8, the mounting firmness of the cooling liquid delivery pipe 4 is strengthened, the sealing performance of the connection between the cooling liquid delivery pipe 4 and the second water-cooling joint 3 is improved, and the cooling liquid delivery pipe 4 is also not loosened and does not cause leakage in a long-term vibration environment.

According to another embodiment of the present application, there is provided a battery, comprising a battery enclosure configured to store a plurality of battery cells 13. The battery enclosure comprises an enclosure bottom plate 1, enclosure end plates 2 and enclosure side plates 6; of course, the battery enclosure further comprises a cover plate (not shown) located at the top; and
the battery further comprises two battery cooling structures, the second cooling channels 2-1 of the battery cooling structures are provided on the enclosure end plates 2 at the same end, one of the battery cooling structures constitutes a cooling liquid input path, and the other of the battery cooling structures constitutes a cooling liquid output path.

By providing the second cooling channels 2-1 of the two battery cooling structures on the enclosure end plates 2 at the same end, the corresponding first water-cooling joints 5 and the corresponding cooling liquid delivery pipes 4 are also provided on the enclosure end plates 2 at the same end and respectively provide the functions of inputting a cooling liquid and outputting the cooling liquid for the battery enclosure, reducing the overall size of the battery, and also facilitating the mounting of the first water-cooling joints 5, the cooling liquid delivery pipes 4 and the second water-cooling joints 3.

As shown in Figs 12, 13, and 14, an upper edge and a lower edge close to the enclosure end plate 2 are provided with protruding strips in a thickness direction of the enclosure end plate 2, the protruding strip of the lower edge is provided with a first positioning groove 2-4 at a position corresponding to the first water-cooling joint 5, and the first water-cooling joint 5 is secured in the first positioning groove 2-4; the protruding strip of the upper edge is provided with a second positioning groove 2-2 at a position corresponding to the second water-cooling joint 3, the second water-cooling joint 3 is secured in the second positioning groove 2-2, and the first water-cooling joint 5, the second water-cooling joint 3, and the cooling liquid delivery pipe 4 are not higher than the protruding strips.

By providing the protruding strips, on the one hand, the structural strength of the enclosure end plates 2 is strengthened, and it is also convenient to mount the first water-cooling joints 5, the cooling liquid delivery pipes 4 and the second water-cooling joints 3; on the other hand, the first water-cooling joints 5, the second water-cooling joints 3, and the cooling liquid delivery pipes 4 are not higher than the protruding strips, so that the battery enclosure is regular in appearance, facilitating the centralized arrangement of the plurality of battery enclosures.

As shown in Fig. 11, the upper end of the body of the second water cooling joint 3 is provided with a positioning block 3-2, the upper port 3-3 is provided on the positioning block 3-2, and the upper port 3-3 protrudes upward from the upper edge of the enclosure end plate 2, a stopper 2-3 is provided at the upper portion of the second positioning groove 2-2, the stopper 2-3 restricts the positioning block 3-2 from the outer side of the enclosure end plate 2, and the second water-cooling joint 3 is welded and fixed to an edge of the second positioning groove 2-2.

By providing the stopper 2-3, the second water-cooling joint 3 is limited, the mounting firmness of the second water-cooling joint 3 is strengthened, and the second water-cooling joint 3 is also not loosened in a long-term vibration environment. The second water-cooling joint 3 is welded and fixed to the enclosure end plate 2, so that the structural strength of the enclosure end plate 2 can also be improved.

As shown in Figs 3 and 5, the battery comprises two battery enclosures which are stacked one above another. Only the battery enclosure located on an uppermost layer is provided with the second positioning groove 2-2 corresponding to the second water-cooling joint 3, and each of the battery cooling structures is internally provided with the same number of cooling liquid delivery pipes 4 as the number of the battery enclosures; and
the protruding strip of the lower edge of the enclosure end plate 2 is provided with a third positioning groove 2-5 and a retainer ring 7 corresponding to the cooling liquid delivery pipe 4, the retainer ring 7 is provided with mounting holes, bolts are provided in the mounting holes, and the cooling liquid delivery pipe 4 is secured in the third positioning groove 2-5 by means of the retainer ring 7.

Of course, the battery may further comprise more than two battery enclosures by correspondingly adjusting the battery cooling structures, which will not be repeatedly described here.

By stacking two or more of the battery enclosures one above another, and providing the first water-cooling joints 5, the cooling liquid delivery pipes 4 and the second water-cooling joints 3 on the enclosure end plates 2 at the same end, the overall size of the battery is reduced, the energy density of the battery is improved, the manufacturing costs of the battery are reduced, and the manufacturing efficiency of the battery is increased.

According to a second aspect of the present application, as shown in Fig. 1, there is provided a power consuming device, comprising the battery 10 described in the first aspect above, the battery 10 being configured to provide electrical energy. For parts not described in detail in this embodiment, reference may be made to the foregoing embodiments.

Finally, it should be noted that the foregoing embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the corresponding technical solutions of the embodiments of the present application.

## Claims

1. A battery cooling structure, **characterized by** comprising:
a cooling liquid delivery pipe configured to deliver a cooling liquid to a battery enclosure;
a cooling channel comprising a first cooling channel and a second cooling channel, the first cooling channel being provided in an enclosure bottom plate of the battery enclosure, the second cooling channel being provided in an enclosure end plate of the battery enclosure, and the first cooling channel and the second cooling channel being in communication with each other once the enclosure bottom plate and the enclosure end plate are combined; and
a first water-cooling joint provided on an outer side of the enclosure end plate and comprising a first end and a second end, the first end being connected to the cooling liquid delivery pipe, and the second end being connected to the second cooling channel, such that the cooling liquid is input into or output from the cooling channel via the first water-cooling j oint.

2. The battery cooling structure according to claim 1, **characterized in that** the first water-cooling joint is configured to be in an L shape, the first end is provided with a pagoda connection structure and is connected to the cooling liquid delivery pipe in a sealed manner by means of the pagoda connection structure, and the second end is provided with a plurality of sealing rings on an outer circumferential surface thereof and is connected to the second cooling channel in a sealed manner by means of the sealing rings.

3. The battery cooling structure according to claim 1 or 2, **characterized in that** the battery cooling structure further comprises a second water-cooling joint, the second water-cooling joint being provided on an outer side of the enclosure end plate and being fixedly connected to the enclosure end plate; the second water-cooling joint comprises a body, wherein the body is internally provided with an internal channel, an upper portion of the body is provided with at least one upper port, a lower portion of the body is provided with at least one lower port, and the upper port is in communication with the lower port by means of the internal channel.

4. The battery cooling structure according to claim 3, **characterized in that** a plurality of the cooling liquid delivery pipes are provided, a plurality of the first water-cooling joints are provided, and a plurality of the lower ports are provided at the lower portion of the body; an upper end of each of the cooling liquid delivery pipes is connected to one of the lower ports of the second water-cooling joint, a lower end of each of the cooling liquid delivery pipes is connected to one of the first water-cooling joints, and a plurality of the first water-cooling joints are respectively connected to the cooling channels of a plurality of enclosure bottom plates.

5. The battery cooling structure according to claim 3 or 4, **characterized in that** a first wing plate is provided on a side of the first water-cooling joint, mounting holes are provided in the first wing plate, and bolts are provided in the mounting holes to secure the first water-cooling joint on the enclosure end plate.

6. The battery cooling structure according to any one of claims 3-5, **characterized in that** a second wing plate is provided on a side of the upper end of the cooling liquid delivery pipe, mounting holes are provided in the second wing plate, and bolts are provided in the mounting holes to secure the cooling liquid delivery pipe on the second water-cooling joint.

7. A battery, comprising a battery enclosure configured to store a plurality of battery cells, the battery enclosure comprising an enclosure bottom plate, enclosure end plates and enclosure side plates; **characterized in that**
the battery further comprises two of the battery cooling structures described in any one of claims 3-6, the second cooling channels of the battery cooling structures are provided on the enclosure end plates at the same end, any one of the battery cooling structures constitutes a cooling liquid input path, and the other of the battery cooling structures constitutes a cooling liquid output path.

8. The battery according to claim 7, **characterized in that** an upper edge and a lower edge close to the enclosure end plate are provided with protruding strips in a thickness direction of the enclosure end plate, the protruding strip of the lower edge is provided with a first positioning groove corresponding to the first water-cooling joint, and the first water-cooling joint is secured in the first positioning groove; the protruding strip of the upper edge is provided with a second positioning groove at a position corresponding to the second water-cooling j oint, the second water-cooling j oint is secured in the second positioning groove, and the first water-cooling joint, the second water-cooling joint, and the cooling liquid delivery pipe are not higher than the protruding strips.

9. The battery according to claim 8, **characterized in that** a positioning block is provided at an upper end of the body of the second water-cooling joint, the upper port is provided on the positioning block and protrudes upward from the upper edge of the enclosure end plate, a stopper is provided at an upper portion of the second positioning groove and restricts the positioning block from the outer side of the enclosure end plate, and the second water-cooling joint is welded and fixed to an edge of the second positioning groove.

10. The battery according to claim 8 or 9, **characterized in that** the battery comprises two or more of the battery enclosures which are stacked one above another, with only the battery enclosure located on an uppermost layer being provided with the second positioning groove at a position corresponding to the second water-cooling j oint, and each of the battery cooling structures is internally provided with the same number of cooling liquid delivery pipes as the number of the battery enclosures; and
the protruding strip of the lower edge of the enclosure end plate is provided with a third positioning groove and a retainer ring corresponding to the cooling liquid delivery pipe, the retainer ring is provided with mounting holes, bolts are provided in the mounting holes, and the cooling liquid delivery pipe is secured in the third positioning groove by means of the retainer ring.

11. A power consuming device, **characterized by** comprising a battery according to any one of claims 7-10, the battery being configured to provide electric energy.
